# EUROPÄISCHE PATENTSCHRIFT

(11) **EP 1 185 447 B1**
(45) Veröffentlichungstag und Bekanntmachung des Hinweises auf die Patenterteilung: **25.01.2006**
(21) Anmeldenummer: 00938655.8
(22) Anmeldetag: 19.05.2000
(51) Int. Cl.: B60T 8/34, B60T 17/04, B60T 17/22, B60T 15/24, B60T 13/66

(54) **DRUCKMITTELBETÄTIGTE FAHRZEUGBREMSANLAGE**
AUTOMOTIVE BRAKING SYSTEM ACTUATED BY A PRESSURE FLUID
SYSTEME DE FREINAGE DE VEHICULE A COMMANDE PAR FLUIDE SOUS PRESSION

(30) Priorität: 21.05.1999 DE 19923455
(43) Veröffentlichungstag der Anmeldung: 13.03.2002
(73) Patentinhaber: KNORR-BREMSE SYSTEME FÜR NUTZFAHRZEUGE GMBH, 80809 München (DE)
(72) Erfinder: STUMPE, Werner, D-70374 Stuttgart (DE)
(86) Internationale Anmeldenummer: PCT/EP2000/004556
(87) Internationale Veröffentlichungsnummer: WO 2001/000470

(56) Entgegenhaltungen:
- EP-A- 0 738 640
- EP-A- 0 911 237

## Beschreibung

### Stand der Technik

Die Erfindung geht aus von einer druckmittelbetätigten Fahrzeugbremsanlage nach der Gattung des Patentanspruchs 1.

Eine derartige Fahrzeugbremsanlage ist aus der EP 0 738 640 A oder DE 195 04 393 C1 bekannt. Die bekannte Bremsanlage ist für ein Nutzfahrzeug vorgesehen und hat einen pneumatisch und/oder elektrisch betätigbaren Hinterachs-Bremskreis für die beiden Räder der Hinterachse und einen pneumatisch und/oder elektrisch betätigbaren Vorderachs-Bremskreis für die der Vorderachse. Bei Ausfall des einen Bremskreises soll der andere Bremskreis das Nutzfahrzeug noch ausreichend verzögern.

Dem Hinterachs-Bremskreis sind zwei als FederspeicherBremszylinder (Kombibremszylinder) ausgebildete Bremszylinder zugeordnet, die über eine erste Steuerventileinrichtung in Abhängigkeit von einem dem Hinterachs-Bremskreis zugeordneten Steuersignal eines Mehrkreis-Bremswertgebers mit einem Druckluftbehälter für den Hinterachs-Bremskreis verbindbar sind. Der Vorderachs-Bremskreis hat einen Bremszylinder für das rechte Vorderrad und einen Bremszylinder für das linke Vorderrad, welche über eine zweite Steuerventileinrichtung in Abhängigkeit von einem dem Vorderachs-Bremskreis zugeordneten Steuersignal des Mehrkreis-Bremswertgebers mit einem Druckluftbehälter für den Vorderachs-Bremskreis verbindbar sind. Die zweite Steuerventileinrichtung weist einen mit dem Druckluftbehälter für den Vorderachs-Bremskreis verbundenen ersten Druckeingang und einen mit einem Steuerausgang eines Betriebsbremsventils verbundenen zweiten Druckeingang auf, durch weichen ein vom Betriebsbremsventil abgeleiteter Vorderachs-Steuerdruck eingesteuert wird. Im weiteren hat die zweite Steuerventileinrichtung einen mit dem ersten Bremszylinder und dem zweiten Bremszylinder verbundenen Druckausgang.

Bedingt durch die dynamische Achslastverlagerung bei einem Bremsvorgang muß der größte Anteil der Bremskraft von den Vorderrädern aufgebracht werden. Bei Nutzfahrzeugen mit hoher Vorderachslast und zumindest zeitweise niedriger Hinterachslast, wie z.B. bei Sattelzugmaschinen, trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises ist daher nicht mehr sichergestellt, daß die nun von den allein durch die Hinterräder gelieferte Bremskraft ausreicht, um die vom Gesetzgeber vorgeschriebene Verzögerung aufzubringen. Ein solcher Ausfall des Vorderachs-Bremskreises wird z.B. durch den Riß einer Druckluftleitung oder durch Undichtigkeiten im Vorderachs-Bremskreis hervorgerufen, so daß mit der Zeit der Druck im Druckluftbehälter des Vorderachs-Bremskreises sinkt.

Um diesem Problem zu begegnen, ist bei der bekannten Fahrzeugbremsanlage zwischen dem Druckausgang der zweiten Steuerventileinrichtung und dem Bremszylinder für das linke Vorderrad eine Umschalt-Ventilanordnung in Form eines Relaisventils vorgesehen, dessen Relaiskolben von einem vom Mehrkreis-Bremswertgeber abgeleiteten Hinterachs-Steuerdruck derart drucksteuerbar ist, daß der Bremszylinder des linken Vorderrades mit einem vom Druckluftbehälter des Vorderachs-Bremskreises unabhängigen Druckluftbehälter verbindbar ist. Das bekannte Relaisventil hat ein als kombiniertes Einlaß- und Auslaßventil ausgebildetes Doppelsitzventil. Bei intaktem Vorderachs-Bremskreis ist beim Bremsen eine Wirkfläche des Relaiskolbens durch den Vorderachs-Bremsdruck beaufschlagt, während die andere Wirkfläche durch den Hinterachs-Steuerdruck beaufschlagt ist. Hierdurch werden am Relaiskolben gegeneinander gerichetete Kräfte erzeugt, wobei die Größe der Wirkflächen des Relaiskolbens so gewählt ist, daß das Auslaßventil beim Bremsen geöffnet gehalten wird und somit der von der zweiten Steuerventileinrichtung erzeugte Vorderachs-Bremsdruck durch das geöffnete Auslaßventil zum Bremszylinder des linken Vorderrades durchgesteuert werden kann.

Bei Ausfall des Vorderachs-Bremskreises sinkt der Druck in dem dem Vorderachs-Bremskreis zugeordneten Druckluftbehälter und auch der Vorderachs-Bremsdruck auf die eine Wirkfläche des Relaiskolbens. Hierdurch schaltet der Relaiskolben das Doppelsitzventil in eine Notbrems-Funktionstellung, weil er durch den an der anderen Wirkfläche noch anstehenden Hinterachs-Steuerdruck in eine das Auslaßventil schließende und das Einlaßventil öffnende Position gedrängt ist. Durch das geöffnete Einlaßventil kann nun die Druckluft des vom Druckluftbehälter des Vorderachs-Bremskreises unabhängigen Druckluftbehälters zum Bremszylinder des linken Vorderrades geschaltet werden, um dort als Ersatz für den ausgefallenen Vorderachs-Bremsdruck zu dienen.

Findet bei der bekannten Fahrzeugbremsanlage zusätzlich eine radschlupfabhängige Regelung des Bremsdrucks z.B. zum Zwecke der Blockierschutzregelung (ABS) oder der Antriebsschlupfregelung (ASR) statt, so wird der Bremsdruck radindividuell oder achsweise zeitweise auf Null geregelt. Hierdurch würde die oben beschriebene Umschalt-Ventilanordnung in ihre Notbrems-Funktionsstellung geschaltet werden und unnötigerweise Druckluft des vom Druckluftbehälter des Vorderachs-Bremskreises unabhängigen Druckluftbehälters zum Bremszylinder des linken Vorderrades gelangen.

### Vorteile der Erfindung

Die erfindungsgemäße druckmittelbetätigte Fahrzeugbremsanlage hat demgegenüber den Vorteil, daß im Fall einer schlupfgeregelten Bremsung die der Umschalt-Ventilanordnung vorgeordnete Schalteinrichtung in den Sperrzustand schaltet, in welchem kein Umschaltsignal zur Umschalt-Ventilanordnung durchgeschaltet werden kann. Dadurch unterbleibt eine unnötige Zuschaltung von Druckluft aus dem zusätzlichen Druckluftspeicher. Wegen des Durchschaltzustands der Schalteinrichtung im Fall einer schlupffreien Bremsung bleibt die Notbrems-Funktion der Umschalt-Ventilanordnung vollständig erhalten.

Durch die in den Unteransprüchen aufgeführten Maßnahmen sind vorteilhafte Weiterbildungen und Verbesserungen der im Patentanspruch 1 angegebenen druckmittelbetätigten Fahrzeugbremsanlage möglich.
Besonders zu bevorzugende Maßnahmen sehen vor, daß die Steuer- und Regeleinrichtung ein Steuergerät beinhaltet, durch welches in Abhängigkeit einer Schlupfregelung des dem ersten Bremszylinder zugeordneten Rades ein elektrisches Steuersignal zur Ansteuerung der Schalteinrichtung erzeugbar ist und daß die Schalteinrichtung ein elektrisch steuerbares 3/2-Wegeventil beinhaltet, welches stromlos den Durchschaltzustand und bestromt den Sperrzustand einnimmt. Wegen der stromlosen Durchgangsstellung des 3/2-Wegeventils bleibt die Umschalt-Ventilanordnung zum Auslösen der Notbrems-Funktion auch bei Ausfall oder bei Abschalten der Steuer- und Regeleinrichtung wirksam.

### Zeichnungen

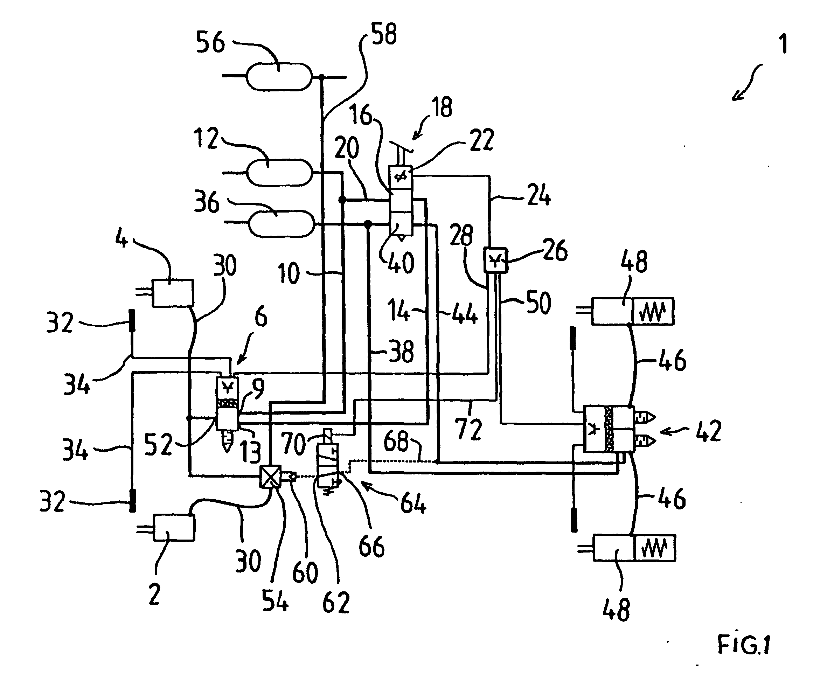

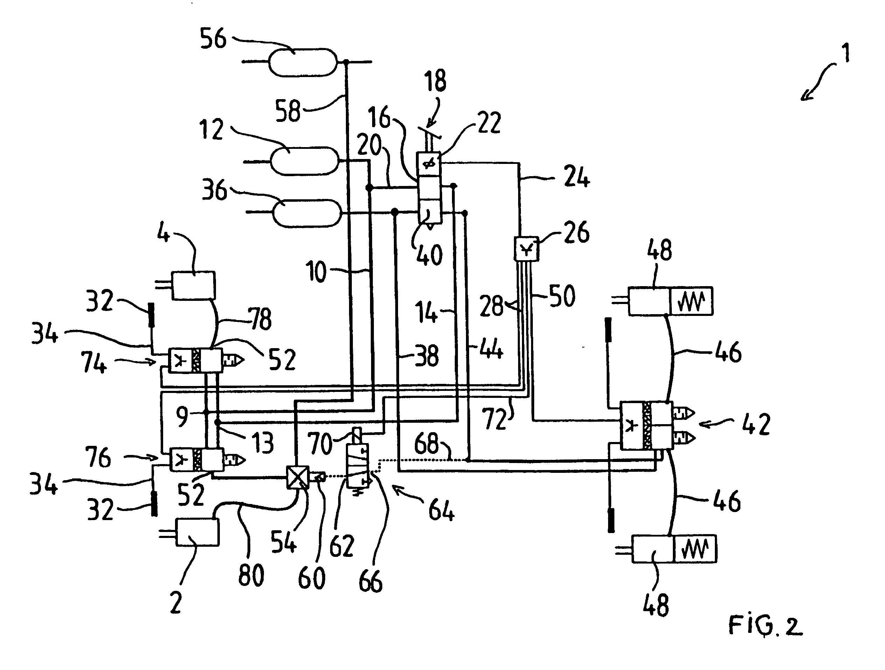

Ausführungsbeispiele der Erfindung sind in den Zeichnungen dargestellt und in der nachfolgenden Beschreibung näher erläutert. Fig.1 zeigt einen Schaltplan eines bevorzugten Ausführungsbeispiels der druckmittelbetätigten Fahrzeugbremsanlage gemäß der Erfindung mit einer einkanalig geregelten Vorderachse. Fig.2 zeigt einen Schaltplan eines weiteren Ausführungsbeispiels der druckmittelbetätigten Fahrzeugbremsanlage mit einer zweikanalig geregelten Vorderachse.

### Beschreibung der Ausführungsbeispiele

Die in Fig.1 insgesamt mit 1 bezeichnete druckmittelbetätigte Fahrzeugbremsanlage ist gemäß der bevorzugten Ausführungsform eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, welche von einem Ein-Kanal-Druckregelmodul 6 angesteuert sind. Das Druckregelmodul 6 der Vorderachse ist zum einen mit seinem Druckeingang 9 über eine Vorratsdruckleitung 10 mit einem Druckluftspeicher 12 für die Vorderachse und andererseits mit seinem Steuereingang 13 über eine Steuerdruckleitung 14 mit der Steuerseite eines Vorderachskanals 16 eines Betriebsbremsventils 18 verbunden.

Der Vorderachskanal 16 des Betriebsbremsventils 18 steht eingangseitig durch einen Zweig 20 der Vorratsdruckleitung 10 mit dem Druckluftspeicher 12 der Vorderachse in Verbindung, um in Abhängigkeit von der Kraft, mit welcher der Fahrer das Bremspedal betätigt, proportionale Steuerdrucksignale in die Steuerdruckleitung 14 der Vorderachse einzusteuem.

Zusätzlich wird bei Betätigung der Bremse in einem elektrischen Teil 22 des Betriebsbremsventils 18 ein proportionales elektrisches Steuersignal erzeugt und über eine elektrische Leitung 24 an eine zentrale elektronische Steuereinheit 26 geleitet, welche mittels einer elektrischen Steuerleitung 28 das Druckregelmodul 6 der Vorderachse ansteuert. Abhängig von den elektrischen Steuersignalen wird im Druckregelmodul 6 der Vorderachse in bekannter Weise ein modulierter Steuerdruck erzeugt und über eine gemeinsame pneumatische Bremsdruckleitung 30 in die Bremszylinder 2, 4 eingesteuert. Der Druckluftspeicher 12 für die Vorderachse, der elektrische Teil 22 des Betriebsbremsventils 18, die zentrale elektronische Steuereinheit 26, die elektrische Steuerleitung 28, das Druckregelmodul 6, die Bremsdruckleitung 30 und die Bremszylinder 2, 4 bilden zusammen einen elektro-pneumatischen Vorderachs-Bremskreis.

Die Schaltungslogik des Druckregelmoduls 6 behandelt die elektrischen Steuersignale des elektro-pneumatischen Vorderachs-Bremskreises vorrangig vor den über die Steuerdruckleitung 14 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist. Der elektro-pneumatische Vorderachs-Bremskreis überschneidet sich teilweise mit dem pneumatischen Vorderachs-Bremskreis, der den Druckluftspeicher 12 für die Vorderachse, den Vorderachskanal 16 des Betriebsbremsventils 18, die Steuerdruckleitung 14, das Druckregelmodul 6, die Bremsdruckleitung 30 und die beiden Bremszylinder 2, 4 umfaßt.

Das Druckregelmodul 6 der Vorderachse ermöglicht neben der Regelung des Bremsdruckes durch integrierte ABS (Anti-Blockier-System)-Funktionen eine Anpassung des Bremsdruckes an das Drehverhalten der gebremsten Vorderräder, welches von radbezogenen Drehzahlsensoren 32 gemessen und mittels elektrischer Leitungen 34 an das Druckregelmodul 6 geleitet wird. Bei einer ABS-Regelung an der einkanalig geregelten Vorderachse gemäß Fig.1 regelt das Druckregelmodul 6 einen gemeinsamen Bremsdruck über die gemeinsame Bremsdruckleitung 30 in den Bremszylinder 2 des linken Vorderrades und in den Bremszylinder 4 des rechten Vorderrades ein, vorzugsweise nach dem sogenannten "Select-Low-Verfahren", bei welchem sich der gemeinsame Bremsdruck für beide Bremszylinder 2, 4 nach dem Rad richtet, welches auf dem niedrigeren Reibwert läuft.

Ein elektro-pneumatischer Hinterachs-Bremskreis und ein diesem gegenüber nachrangiger pneumatischer Hinterachs-Bremskreis sind mit Ausnahme der einkanaligen Bremsdruck-Regelung analog aufgebaut, wobei für die Hinterachse ein eigener Druckluftspeicher 36 vorgesehen ist, welcher durch eine Vorratsdruckleitung 38 einerseits mit dem Eingang eines Hinterachskanals 40 des Betriebsbremsventils 18 und andererseits mit einem zweikanaligen Druckregelmodul 42 der Hinterachse in Verbindung steht, wobei je ein Kanal zur Regelung des Bremsdrucks eines einzelnen Hinterrades vorgesehen ist.

Ausgangsseitig steuert das Betriebsbremsventil 18 zum einen mittels einer Steuerdruckleitung 44 Steuerdrucksignale in das Druckregelmodul 42 der Hinterachse ein, welches über pneumatische Bremsdruckleitungen 46 mit Kombibremszylindem 48 des rechten und linken Hinterrades in Verbindung steht. Zum andern werden die vom Betriebsbremsventil 18 über die elektrische Leitung 24 an die zentrale elektronische Steuereinheit 26 ausgesteuerten elektrischen Signale mittels einer elektrischen Steuerleitung 50 in das Druckregelmodul 42 der Hinterachse eingesteuert.

In Abhängigkeit der von der zentralen elektronischen Steuereinheit 26 über die elektrischen Steuerleitungen 28, 50 herangeführten elektrischen Steuersignale bzw. bei Ausfall der elektro-pneumatischen Steuerkreise in Abhängigkeit der über die pneumatischen Steuerdruckleitungen 14, 44 herangeführten Steuerdrücke werden in den Druckregelmoduln 6, 42 der Vorderachse und der Hinterachse aus den über die Vorratsdruckleitungen 10, 38 herangeführten Vorratsdrücke jeweils achsweise die Bremsdrücke erzeugt, welche jeweils an einem Druckausgang 52 eines Druckregelmoduls 6, 42 anstehen und über die pneumatische Bremsdruckleitung 30, 46 in die nachgeschalteten Bremszylinder 2, 4 bzw. Kombibremszylinder 48 eingesteuert werden.

Dem Druckausgang 52 des Druckregelmoduls 6 der Vorderachse und dem Bremszylinder 2 des linken Vorderades ist eine z.B. aus DE 195 04 393 C1 bekannte Umschalt-Ventilanordnung 54 zwischengeschaltet, deren Funktion ähnlich der eines Relaisventil ist und durch welche im Falle eines Druckverlusts im Vorderachs-Bremskreis Druckluft aus einem Reserve-Druckluftspeicher 56 zur Erzeugung des Bremsdrucks im Bremszylinder 2 des linken Vorderrades über eine Vorratsdruckleitung 58 herangeführt wird.

Ein Steuereingang 60 der Umschalt-Ventilanordnung steht mit einem Ausgang 62 einer vor- oder übergeordneten Schalteinrichtung in Form eines 3/2-Wegeventils 64 in Verbindung, dessen Eingang 66 über eine pneumatische Verbindungsleitung 68 mit der Steuerdruckleitung 44 der Hinterachse verbunden ist. Ein elektrischer Steueranschluß 70 des 3/2-Wegeventils 64 ist mittels einer elektrischen Steuerleitung 72 mit der zentralen elektronischen Steuereinheit 26 ansteuerbar verbunden. Das 3/2-Wegeventil 64 nimmt stromlos den in Fig.1 gezeigten Durchschaltzustand ein, in welchem sein Eingang 66 zum Ausgang 62 durchgeschaltet ist und deshalb ein in der Steuerdruckleitung 44 geführter Steuerdruck p_{HA} für das Druckregelmodul 42 der Hinterachse am Steuereingang 60 der Umschalt-Ventilanordnung 54 ansteht. Bestromt nimmt das 3/2-Wegeventil 64 einen Sperrzustand ein, in welchem sein Eingang 66 gesperrt und sein Ausgang 62 mit der Atmoshäre verbunden ist.

Die der Umschalt-Ventilanordnung 54 vorgeordnete Schalteinrichtung gemäß der in Fig.1 dargestellten Ausführungsform als 312-Wegeventil 64 hat bei einer über das Betriebsbremsventil 18 eingeleiteten Bremsung folgende Funktionsweise:

Sind im elektro-pneumatischen und/oder im pneumatischen Vorderachs-Bremskreis keine Druckverluste vorhanden, d.h. bei intakten Vorderachsbremskreisen, wird durch das Betriebsbremsventil 18 in der Steuerdruckleitung 14 des pneumatischen Vorderachs-Bremskreises ein Steuerdruck p_{VA} erzeugt und dem Druckregelmodul 6 über den Steuereingang 13 zugeführt. Dieser Steuerdruck wird bei intakter elektrischer Anlage im Druckregelmodul 6 im Rückhalt gehalten. Vorrangig wird im Druckregelmodul 6 abhängig von den über die elektrische Steuerleitung 28 zugeführten Steuersignalen ein Druck moduliert, welcher über den Druckausgang 52 und über die in diesem Fall durchgängige Umschalt-Ventilanordnung 54 einen Bremsdruck in den Bremszylinder 2 des linken Vorderrades einsteuert. Das 3/2-Wegeventil 64 nimmt stromlos den in Fig. 1 dargestellten Durchschaltzustand ein, weshalb der in der Steuerdruckleitung 44 geführte Steuerdruck p_{HA} für das Druckregelmodul 42 der Hinterachse am Steuereingang 60 der Umschalt-Ventilanordnung 54 ansteht. Die Umschalt-Ventilanordnung 54 ist so ausgebildet, daß bei intaktem elektro-pneumatischen und pneumatischem Vorderachsbremskreisen der Bremsdruck für den Bremszylinder 2 des linken Vorderrades nicht durch den Steuerdruck p_{HA} der Hinterachse beeinflußt wird.

Findet nun während der Bremsung eine notwendige radschlupfabhängige Regelung des Bremsdrucks durch den Druckregelmodul 6 statt, z.B. im Fall des Blockierens des linken Vorderrades, wird der Bremsdruck im Bremszylinder 2 des linken Vorderrades und wegen der einkanalig ausgeführten ABS-Bremsdruckregelung der Vorderachse gleichzeitig auch im Bremszylinder 4 des rechten Vorderrades zeitweise auf Null abgesenkt, wodurch ein unerwünschtes Umschalten der Umschalt-Ventilanordnung 54 hervorgerufen und in der Folge Druckluft aus dem Reserve-Druckluftspeicher 56 zur Erzeugung von zusätzlichem Bremsdruck verwendet werden würde.

Demgegenüber wird gemäß der Erfindung während einer Blokkierschutuegelung (ABS) des Bremsdrucks durch den Druckregelmodul 6, welche z.B. mittels eines Vergleichs der mit Hilfe der Drehzahlsensoren 32 gemessenen Radumfangsgeschwindigkeit mit der Geschwindigkeit des Nutzfahrzeugs detektierbar ist, in der zentralen elektronischen Steuereinheit 26 ein elektrisches Steuersignal an den elektrischen Steueranschluß 70 des 3/2-Wegeventils 64 ausgesteuert, welches daraufhin in seinen bestromten Sperrzustand schaltet. Als Folge kann der in der Steuerdruckleitung 44 der Hinterachse anstehende Druck p_{HA} am Steuereingang 60 der Umschalt-Ventilanordnung 54 nicht mehr für deren Umschaltung in die Notbrems-Funktionsstellung sorgen. Da die ABS-Bremsdruck regelung an der Vorderachse einkanalig erfolgt und deshalb der Bremsdruck für beide Bremszylinder 2, 4 gemeinsam eingeregelt wird, wird das elektronische Steuersignal zum Umschalten des 3/2-Wegeventils bereits dann erzeugt, wenn eines Räder, z.B. das dem Bremszylinder 2 zugeordnete linke Vorderrad schlupft.

Sobald die radschlupfabhängige Regelung des Bremsdrucks beendet ist, erhält das 3/2-Wegeventil 64 von der zentralen elektronischen Steuereinheit 26 kein Steuersignal mehr, worauf es in den stromlosen Durchschaltzustand zurückschaltet.

Tritt nun im pneumatischen Vorderachs-Bremskreis oder im elektro-pneumatischen Vorderachs-Bremskreis während einer Bremsung ein Defekt auf, z.B. durch einen Riß oder eine Leckage in der Vorratsdruckleitung 10, im Druckluftspeicher 12 oder durch eine Störung der elektrischen Ansteuerung des Druckregelmoduls 6, so sinkt der Bremsdruck in beiden Bremszylindern 2, 4 ab. Bei achsweise niedrigem oder nicht vorhandenem Bremsdruck kann keines der beiden Räder der Vorderachse blockieren, folglich wird auch keine Blokkierschutzregelung (ABS) aktiviert. Somit wird kein elektrisches Ansteuersignal für das 3/2-Wegeventil 64 erzeugt, woraufhin dieses seinen stromlosen Durchschaltzustand aufrechterhält und der Steuerdruck p_{HA} der Hinterachse zum Steuereingang 60 der Umschalt-Ventilanordnung 54 durchgesteuert werden kann. Da am Ventilkörper der Umschalt-Ventilanordnung 54 wegen des niedrigen oder fehlenden Bremsdruckes der Gleichgewichtszustand gestört ist, schaltet die Umschalt-Ventilanordnung 54 in ihre Notbrems-Funktionsstellung um, woraufhin der Bremszylinder 2 des linken Vorderrades mit einem aus der Druckluft des Reserve-Druckluftspeichers 56 modulierten Bremsdruck versorgt wird und das linke Vorderrad abgebremst werden kann.

Findet nun während einer solchen Notbremsung eine Blockierschutzregelung (ABS) statt, weil am linken Vorderrad zuviel Bremsdruck eingesteuert wurde und dort deshalb Bremsschlupf auftritt, so erkennt das die elektronische Steuereinheit 26 am fehlenden Drucksignal aus dem Druckregelmodul 6 und führt eine Not-ABS-Steuerung aus, bei dem das 3/2-Wegeventil 64 durch das Steuersignal der zentralen elektronischen Steuereinheit 26 in den Sperrzustand geschaltet wird, woraufhin die Umschalt-Ventileinrichtung 54 die Zufuhr von Druckluft aus dem Reserve-Druckluftspeicher 56 unterbindet, der Bremsdruck im Bremszylinder 2 des linken Vorderrades sinkt und dessen Bremsblockierzustand aufgehoben wird.

In Fig.2 ist ein weiteres Ausführungsbeispiel gezeigt, bei welchem als Unterschied zur bevorzugten Ausführungsform der Bremsdruck für die Vorderachse anstatt einkanalig durch zwei Druckregelmodule zweikanalig geregelt ist, wobei ein rechtes Druckregelmodul 74 zur individuellen Regelung des Bremsdruckes im Bremszylinder 4 des rechten Vorderrades und ein linkes Druckregelmodul 76 zur individuellen Regelung des Bremsdruckes im Bremszylinder 2 des linken Vorderades dient. Voneinander unabhängige Bremsdruckleitungen 78, 80 verbinden die Druckregelmoduln 74, 76 mit den Bremszylindern 2, 4. Zur gemeinsamen Druckluftversorgung beider Druckregelmodule 74, 76 sind die Steuerdruckleitung 14 und die Vorratsdruckleitung 10 verzweigt. Im übrigen sind in Fig.2 Bauteile, welche mit denen in Fig.1 identisch sind, mit denselben Bezugszahlen versehen, so ist z.B. die Schalteinrichtung in Form des 312-Wege-Ventils 64 identisch mit dem in Fig.1 dargestellten.

Da die ABS-Bremsdruckregelung radindividuell erfolgt und deshalb eine unerwünschte Umschaltung der Umschalt-Ventilanordnung 54 nur auf eine schlupfgeregelte Senkung des Bremsdrucks im Bremszylinder 2 des linken Vorderrades hin erfolgen kann, wird bei dieser Ausführungsform das, elektrische Steuersignal zur Umschaltung des 312-Wegeventils in den Sperrzustand ausschließlich in Abhängigkeit vom Schlupf des linken Vorderrades erzeugt. Der Funktionsablauf ist dann dergleiche wie bei der bevorzugten Ausführungsform gemäß Fig.1.

Um eine für mehrere Varianten von Schlupfregelungen geeignete Ansteuerung des 312-Wegeventils zur Verfügung zu stellen, kann sowohl für den Fall der einkanaligen Bremsdruckregelung beider Bremszylinder 2,4 gemäß der Ausführungsform von Fig.1 wie auch im Fall der radindividuellen Bremsdruckregelung gemäß der Ausführungsform von Fig.2 das 3/2-Wegeventil in der gewünschten Weise umschaltet werden, indem das elektrische Umschalt-Steuersignal in Abhängigkeit von Auftreten von einer Schlupfregelung am linken Vorderrad und dem am Druckregelmodul-Ausgang 52 steuerbaren Druck erzeugt wird.

## Patentansprüche

1. Druckmittelbetätigbare Fahrzeugbremsanlage mit wenigstens einem ersten Bremskreis und einem zweiten Bremskreis mit folgenden Merkmalen :
a) Dem ersten Bremskreis ist wenigstens ein Bremszylinder (48) zugeordnet, der über eine erste Steuerventileinrichtung (42) in Abhängigkeit von einem dem ersten Bremskreis zugeordneten Steuersignal eines Mehrkreis-Bremswertgebers (18) mit einer Druckmittelquelle (36) für den ersten Bremskreis verbindbar ist,
b) dem zweiten Bremskreis sind ein erster Bremszylinder (2) und ein zweiter Bremszylinder (4) zugeordnet, die über eine zweite Steuerventileinrichtung (6; 74, 76) in Abhängigkeit von einem dem zweiten Bremskreis zugeordneten Steuersignal des Mehrkreis-Bremswertgebers (18) mit einer zweiten Druckmittelquelle (12) für den zweiten Bremskreis verbindbar sind,
c) die zweite Steuerventileinrichtung (6; 74, 76) weist einen mit der Druckmittelquelle (12) für den zweiten Bremskreis verbundenen Druckmitteleingang (9) und einen mit dem ersten Bremszylinder (2) verbundenen Druckmittelausgang (52) auf,
d) dem Druckmittelausgang (52) der zweiten Steuerventileinrichtung (6; 74, 76) und dem ersten Bremszylinder (2) des zweiten Bremskreises ist eine Umschalt-Ventilanordnung (54) zwischengeordnet, von welcher ein Ventilbetätigungsorgan von dem dem ersten Bremskreis zugeordneten Steuersignal derart drucksteuerbar ist, daß der erste Bremszylinder (2) mit einer von der Druckmittelquelle (12) des zweiten Bremskreises unabhängigen Druckmittelquelle (56) verbindbar ist,
**dadurch gekennzeichnet, daß**
e) eine elektronische Steuer- und Regeleinrichtung (6, 26; 74, 76) zur radschlupfabhängigen Regelung mindestens des Bremsdrucks im ersten Bremszylinder (2) und eine der Umschalt-Ventilanordnung (54) vorgeordnete Schalteinrichtung (64) vorgesehen ist, welche im Falle einer schlupfregelungsfreien Bremsung des dem ersten Bremszylinder (2) zugeordneten Rades in einen Durchschaltzustand schaltbar ist, in welchem das dem ersten Bremskreis zugeordnete Steuersignal zur Umschalt-Ventilanordnung (54) durchschaltbar ist, und im Falle einer schlupfgeregelten Bremsung dieses Rades in einen Sperrzustand schaltbar ist, in welchem dieses Steuersignal nicht zur Umschalt-Ventilanordnung (54) durchschaltbar ist.

2. Druckmittelbetätigte Fahrzeugbremsanlage nach Anspruch 1, **dadurch gekennzeichnet, daß** die Steuer- und Regeleinrichtung ein Steuergerät (26) beinhaltet, durch welches in Abhängigkeit einer Schlupfregelung des dem ersten Bremszylinder (2) zugeordneten Rades ein elektrisches Steuersignal zur Ansteuerung der Schalteinrichtung (64) erzeugbar ist.

3. Druckmittelbetätigte Fahrzeugbremsanlage nach Anspruch 2, **dadurch gekennzeichnet, daß** die Schalteinrichtung ein elektrisch steuerbares 3/2-Wegeventil (64) beinhaltet, welches stromlos die Durchschaltzustand und bestromt den Sperrzustand einnimmt.

4. Druckmittelbetätigte Fahrzeugbremsanlage nach Anspruch 3, **dadurch gekennzeichnet, daß**
a) das dem ersten Bremskreis zugeordnete Steuersignal einen ersten pneumatischen Steuerdruck, welcher über eine erste Steuerdruckleitung (44) in die erste Steuerventileinrichtung (42) einsteuerbar ist, und ein erstes, von der elektronischen Steuer- und Regeleinrichtung (26) erzeugtes elektrisches Steuersignal beinhaltet, welches über eine erste elektrische Steuerleitung (50) in die erste Steuerventileinrichtung (42) einsteuerbar ist und daß
b) das dem zweiten Bremskreis zugeordnete Steuersignal einen zweiten pneumatischen Steuerdruck, welcher über eine zweite Steuerdruckleitung (14) in die zweite Steuerventileinrichtung (6; 74, 76) einsteuerbar ist, und ein zweites, von der elektronischen Steuer- und Regeleinrichtung (26) erzeugtes elektrisches Steuersignal beinhaltet, welches über eine zweite elektrische Steuerleitung (28) in die zweite Steuerventileinrichtung (6; 74, 76) einsteuerbar ist, wobei
c) die erste und die zweite Steuerventileinrichtung (6, 42; 74, 76) derart ausgebildet sind, daß sie vorrangig durch die ersten und zweiten elektrischen Steuersignale ansteuerbar sind.

5. Druckmittelbetätigte Fahrzeugbremsanlage nach Anspruch 4, **dadurch gekennzeichnet, daß** das 3/2-Wegeventil (64) folgendes umfaßt :
a) einen Eingang (66), welcher mit der ersten Steuerdruckleitung (44) in Verbindung steht,
b) einen Ausgang (62), welcher mit einem Steuereingang (60) der Umschalt-Ventilanordnung (54) in Verbindung steht,
c) einen elektrischen Steueranschluß (70), welcher mit dem Steuergerät (26) in Verbindung steht, wobei
d) im Durchschaltzustand der Eingang (66) des 3/2-Wegeventils (64) mit dessen Ausgang (62) und im Sperrzustand der Eingang (66) gesperrt und der Ausgang (62) mit der Atmosphäre verbunden ist.

6. Druckmittelbetätigte Fahrzeugbremsanlage nach einem der vorhergehenden Ansprüche, **dadurch gekennzeichnet, daß** der erste Bremskreis ein Hinterachsbremskreis ist und die erste Steuerventileinrichtung ein Zwei-Kanal-Druckregelmodul (42) beinhaltet, welches von der elektronischen Steuer- und Regeleinrichtung umfaßt ist, wobei je ein Kanal den Bremsdruck für einen Bremszylinder (48) der Hinterachse regelt.

7. Druckmittelbetätigte Fahrzeugbremsanlage nach Anspruch 6, **dadurch gekennzeichnet, daß** der zweite Bremskreis ein Vorderachsbremskreis ist und die zweite Steuerventileinrichtung ein Ein-Kanal-Druckregelmodul (6) beinhaltet, welches von der elektronischen Steuer- und Regeleinrichtung umfaßt ist und welches einen gemeinsamen Bremsdruck für die Räder der Vorderachse vorzugsweise nach dem "Select-Low-Verfahren" einregelt.

8. Druckmittelbetätigte Fahrzeugbremsanlage nach Anspruch 6, **dadurch gekennzeichnet, daß** der zweite Bremskreis ein Vorderachsbremskreis ist und die zweite Steuerventileinrichtung zwei Ein-Kanal-Druckregelmodule (74, 76) beinhaltet, welche von der elektronischen Steuer- und Regeleinrichtung umfaßt sind, wobei je ein Druckregelmodul (74, 76) den Bremsdruck in einem Bremszylinder (2, 4) der Vorderachse regelt.

## Claims

1. Vehicle brake system operable by a pressurised medium, comprising at least one first brake circuit and one second brake circuit with the following features:
(a) at least one brake cylinder (48) is associated with said first brake circuit, which, in response to a control signal of a multi-circuit braking-level generator (18), which is associated with said first brake circuit, can be connected via a first control valve means (42) to a source of pressurised medium (36) for said first brake circuit,
(b) a first brake cylinder (2) and a second brake cylinder (4) are associated with said second brake circuit, which, in response to a control signal of a multi-circuit braking-level generator (18), which is associated with said second brake circuit, can be connected via a second control valve means (6; 74, 76) to a second source of pressurised medium (12) for said second brake circuit,
(c) said second control valve means (6; 74, 76) comprises an inlet for pressurised medium (9) connected to said source of pressurised medium (12) for said second brake circuit and an outlet for pressurised medium (52) connected to said first brake cylinder (2),
(d) a change-over valve system is arranged between said outlet for pressurised medium (52) of said second control valve means (6; 74, 76) and said first brake cylinder (2) of said second brake circuit, by means of which a valve actuator element can be controlled in terms of pressure in response to the control signal associated with said first brake circuit in such a way that said first brake cylinder (2) can be connected to a source of pressurised medium (56) that is independent of said source of pressurised medium (12) of said second brake circuit,
**characterised in that**
(e) an electronic control and closed-loop control means (6, 26; 74, 76) for control, as a function of the wheel slip, of at least the braking pressure in said first brake cylinder (2), and a change-over means (64) are provided, which is disposed ahead of said change-over valve system (54) and which, in the event of brake application without slip regulation on the wheel associated with said first brake cylinder (2), can be switched into a through-switching condition in which the control signal associated with said first brake circuit can be switched through to said change-over valve system (54), and, in the event of brake application with slip regulation of this wheel, can be switched into a shut-off state in which this control signal cannot be switched through to said change-over valve system (54).

2. Vehicle brake system operable by a pressurised medium according to Claim 1, **characterised in that** said control and closed-loop control means includes a controller (26) by means of which an electrical control signal for control of said change-over means (64) can be generated as a function of slip regulation of the wheel associated with said first brake cylinder (2).

3. Vehicle brake system operable by a pressurised medium according to Claim 2, **characterised in that** said change-over means includes an electrically controllable 3/2-way valve (64) that sets itself into the through-switching state when current is not supplied, and into the shut-off state when current is supplied.

4. Vehicle brake system operable by a pressurised medium according to Claim 3, **characterised in that**
(a) the control signal associated with said first brake circuit includes a first pneumatic control pressure that can be controlled via a first control pressure line (44) into said first control valve means (42), and a first electrical control signal generated by said electronic control and closed-loop control means (26), which can be controlled via a first electrical control line (50) into said first control valve means (42), and that
(b) the control signal associated with said second brake circuit includes a second pneumatic control pressure that can be controlled via a second control pressure line (14) into said second control valve means (6; 74, 76), and a second electrical control signal generated by said electronic control and closed-loop control means (26), which can be controlled via a second electrical control line (28) into said second control valve means (6; 74, 76),
(c) with said first and second control valve means (6, 42; 74, 76) being designed in such a way that they are predominantly controllable by said first and second electrical control signals.

5. Vehicle brake system operable by a pressurised medium according to Claim 4, **characterised in that** said 3/2-way valve (64) comprises:
(a) an inlet (66) communicating with said first control pressure line (44),
(b) an outlet (62) communicating with a control input (60) of said change-over valve system (54),
(c) an electrical control port (70) in communication with said controller (26),
(d) with the inlet (66) of said 3/2-way valve (64) being connected to the outlet (62) thereof in the through-switching state and with the inlet (66) being shut off and the outlet (62) being connected to the atmosphere in the shut-off state.

6. Vehicle brake system operable by a pressurised medium according to any of the preceding Claims, **characterised in that** said first brake circuit is a rear-axle brake circuit and said first control valve means includes a two-channel pressure regulator module (42) that is included in said electronic control and closed-loop control means, with each of said channels regulating, at a time, the braking pressure for a brake cylinder (48) of the rear axle.

7. Vehicle brake system operable by a pressurised medium according to Claim 6, **characterised in that** said second brake circuit is a front-axle brake circuit and said second control valve means includes a single-channel pressure regulator module (6) that is included in said electronic control and closed-loop control means and regulates a common brake pressure for the wheels of the front axle preferably in correspondence with the "select-low method".

8. Vehicle brake system operable by a pressurised medium according to Claim 6, **characterised in that** said second brake circuit is a front-axle brake circuit and said second control valve means includes two single-channel pressure regulator modules (74, 76) that are included in said electronic control and closed-loop control means, with a respective pressure regulator module (74, 76) controlling the braking pressure in one brake cylinder (2, 4) of the front axle.

## Revendications

1. Système des freins d'un véhicule, commandable par un milieu sous pression, comprenant au moins un premier circuit de frein et un deuxième circuit de frein aux caractéristiques suivantes :
(a) au moins un cylindre de frein (48) est affecté audit premier circuit de frein, qui, en réponse à un signal de commande d'un générateur d'efforts de freinage à plusieurs circuits (18), qui est affecté audit premier circuit de frein, se peut raccorder, via un premier moyen à clapets de commande (42), à une source de milieu sous pression (36) pour ledit premier circuit de frein,
(b) un premier cylindre de frein (2) et un deuxième cylindre de frein (4) sont affectés audit deuxième circuit de frein, qui, en réponse à un signal de commande d'un générateur d'efforts de freinage à plusieurs circuits (18), qui est affecté audit deuxième circuit de frein, se peuvent raccorder, via un deuxième moyen à clapets de commande (6; 74, 76), à une deuxième source de milieu sous pression (12) pour ledit deuxième circuit de frein,
(c) ledit deuxième moyen à clapets de commande (6; 74, 76) comprend une entrée pour le milieu sous pression (9), qui est raccordée à ladite source de milieu sous pression (12) pour ledit deuxième circuit de frein, et une sortie pour le milieu sous pression (52), qui est raccordée audit premier cylindre de frein (2),
(d) un ensemble de clapets d'inversion est disposé entre ladite sortie pour le milieu sous pression (52) dudit deuxième moyen à clapets de commande (6; 74, 76) et ledit premier cylindre de frein (2) dudit deuxième circuit de frein, moyennant lequel un organe acteur de clapets est commandable par pression en réponse au signal de commande affecté audit premier circuit de frein d'une telle manière, que ledit premier cylindre de frein (2) soit raccordable à une source de milieu sous pression (56) indépendante de ladite source de milieu sous pression (12) dudit deuxième circuit de frein,
**caractérisé en ce**
(e) qu'un moyen électronique de commande et de réglage (6, 26; 74, 76) pour la commande, en fonction du glissement des roues, au moins de la pression de freinage dans ledit premier cylindre de frein (2), et un moyen d'inversion (64) sont disposés, le dernier en amont dudit ensemble de clapets d'inversion (54), qui, au cas de freinage sans réglage de glissement à la roue affectée audit premier cylindre de frein (2), se peut commuter en un état de connexion, dans lequel le signal de commande affecté audit premier circuit de frein peut être passé audit ensemble de clapets d'inversion (54), et, au cas de freinage à réglage de glissement de cette roue, se peut commuter en un état de blocage, dans lequel ce signal de commande ne peut pas être passé audit ensemble de clapets d'inversion (54).

2. Système des freins d'un véhicule, commandable par un milieu sous pression selon la revendication 1, **caractérisé en ce que** ledit moyen de commande et de réglage renferme un dispositif de commande (26), moyennant duquel on peut engendrer un signal électrique de commande à commander ledit moyen d'inversion (64) en fonction du réglage de glissement de la roue affectée audit premier cylindre de frein (2).

3. Système des freins d'un véhicule, commandable par un milieu sous pression selon la revendication 2, **caractérisé en ce que** ledit moyen d'inversion renferme un clapet à 3/2 voies à commande électrique (64), qui se passe en l'état de connexion, sans alimentation en courant, et en l'état de blocage au cas d'alimentation de courant.

4. Système des freins d'un véhicule, commandable par un milieu sous pression selon la revendication 3, **caractérisé en ce**
(a) que le signal de commande affecté audit premier circuit de frein renferme une première pression pneumatique de commande, qui est commandable via une première ligne de pression de commande (44) dans ledit premier moyen à clapets de commande (42), et un deuxième signal de commande électrique, engendré par ledit moyen électronique de commande et de réglage (26), qui est commandable via une première ligne de commande électrique (50), dans ledit premier moyen à clapets de commande (42), et
(b) en ce que le signal de commande affecté audit deuxième circuit de frein renferme une deuxième pression pneumatique de commande, qui est commandable via une deuxième ligne de pression de commande (14) dans ledit deuxième moyen à clapets de commande (6; 74, 76), et un deuxième signal de commande électrique, engendré par ledit moyen électronique de commande et de réglage ((28) dans ledit deuxième moyen à clapets de commande (6; 74, 76),
(c) auxdits premier et deuxième moyens à clapets de commande (6, 42; 74, 76) étant conçus d'une telle manière, qu'ils soient commandable surtout par lesdits premier et deuxième signaux électriques de commande.

5. Système des freins d'un véhicule, commandable par un milieu sous pression selon la revendication 4, **caractérisé en ce que** ledit clapet à 3/2 voies (64) comprend :
(a) une entrée (66) en communication avec ladite première ligne de pression de commande (44),
(b) une sortie (62) en communication avec une entrée de commande (60) dudit ensemble de clapets d'inversion (54),
(c) un raccord de commande électrique (70) en communication avec ledit dispositif de commande (26),
(d) à ladite entrée (66) dudit clapet à 3/2 voies (64) étant raccordée à la sortie (62) du dernier en état de connexion et à l'entrée (66) étant bloquée et la sortie (62) étant raccordée à l'atmosphère en état de blocage.

6. Système des freins d'un véhicule, commandable par un milieu sous pression selon une quelconque des revendications précédentes, **caractérisé en ce que** ledit premier circuit de frein est un circuit de freins de l'essieu arrière et ledit premier moyen à clapets de commande renferme un module régulateur de pression à deux voies (42), qui est incorporé dans ledit moyen électronique de commande et de réglage, à chacune desdites voies réglant respectivement la pression de freinage pour un cylindre de frein (48) de l'essieu arrière.

7. Système des freins d'un véhicule, commandable par un milieu sous pression selon la revendication 6, **caractérisé en ce que** ledit deuxième circuit de frein est un circuit de freins de l'essieu avant et ledit deuxième moyen à clapets de commande renferme un module régulateur de pression à une seule voie (6), qui est incorporé dans ledit moyen électronique de commande et de réglage et règle une pression de freinage commune pour les roues de l'essieu avant, de préférence en correspondance avec la méthode dite « select-low ».

8. Système des freins d'un véhicule, commandable par un milieu sous pression selon la revendication 6, **caractérisé en ce que** ledit deuxième circuit de frein est un circuit de freins de l'essieu avant et ledit deuxième moyen à clapets de commande renferme deux modules régulateurs de pression à une seule voie (74, 76), qui sont incorporés dans ledit moyen électronique de commande et de réglage, à un module régulateur de pression respectif (74, 76) commandant la pression de freinage dans un cylindre de frein (2, 4) de l'essieu avant.
